Europäisches Patentamt

European Patent Office

Office européen des brevets

(11) Veröffentlichungsnummer: **0 298 362**
**A1**

(12) # EUROPÄISCHE PATENTANMELDUNG

(21) Anmeldenummer: 88110429.3

(51) Int. Cl.4: **H04N 5/44**

(22) Anmeldetag: **30.06.88**

(30) Priorität: **04.07.87 DE 3722172**

(43) Veröffentlichungstag der Anmeldung:
**11.01.89 Patentblatt 89/02**

(84) Benannte Vertragsstaaten:
**ES GR**

(71) Anmelder: **Deutsche Thomson-Brandt GmbH**
**Postfach 2060**
**D-7730 Villingen-Schwenningen(DE)**

(72) Erfinder: **Guillon, Jean-Claude**
**10-Rue de Provence Gerstheim**
**F-67150 Erstein(FR)**
Erfinder: **Rufray, Jean-Claude**
**Hans Thoma Strasse 6**
**D-7734 Brigachtal(DE)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) Verfahren und Vorrichtung zur Ausschnittvergrösserung eines Fernsehbildes.

(57) Ausschnittsvergrößerungen von Fernsehbildern lassen sich durch Dehnung des Bildes gleichzeitig in vertikaler und horizontaler Richtung erzielen. Im einfachsten Fall kann dies durch Erhöhung der Ablenkamplituden erfolgen. Da die Horizontalablenkung den größten Teil der in einem Bildwiedergabegerät umgesetzten Energie benötigt und leistungsstarke Bauelemente verlangt, würde eine Erhöhung der Ablenkamplituden die Energieaufnahme nochmals steigern und auf die Forderungen an die Leistungsfähigkeit verwendeten Bauelemente weiter erhöhen. Dies ist unerwünscht.

Die Erfindung schafft Abhilfe, indem die in horizontaler Richtung aufeinanderfolgenden Bildinformation einer gerade übertragenen oder wiedergegebenen Bildzeile gespeichert werden und anschließend aufeinanderfolgende Bildinformationen eines Ausschnitts der Bildzeile über die gesamte Zeilenbreite gedehnt dargestellt werden.

Die Erfindung ist als wählbare Umsatzfunktion bei Fernsehempfängern einsetzbar, um z.B. bei Wiedergabe von Spielfilmen mit einem anderen Format eine Umsetzung auf die volle Bildschirmhöhe zu erzielen ohne dabei Verzerrungen der Geometrie hinnehmen zu müssen.

Fig.2

## Verfahren und Vorrichtung zur Ausschnittvergrößerung eines Fernsehbildes

Die Erfindung betrifft eine Verfahren zur Ausschnittsvergrößerung eines Fernsehbildes nach dem Oberbegriff des Anspruchs 1.

Bei Übertragung von Kinofilmen, deren Format ein anderes Breiten-Höhen-Verhältnis als ein Fernsehbildschirm hat, kann es erwünscht sein, das dargestellte Bild zu vergrößern, um so das volle Bildschirmformat auszunutzen. Auch kann es erwünscht sein, einzelne Szenen einer Fernsehübertragung vergrößert darzustellen.

Eine Dehnung des Bildes kann durch Vergrößerung der Vertikal- und Horizontalablenkamplitude erzielt werden. Da in der Horizontalablenkung der größte Leistungsbedarf und die höchste Beanspruchung der Bauelemente auftritt, würde eine weitere Steigerung der Horizontalablenkamplitude den Leistungsbedarf und die Belastung der Bauelemente weiter steigern.

Der Erfindung liegt deshalb die Aufgabe zugrunde, ein Verfahren zur Ausschnittsvergrößerung eines Fernsehbildes zu schaffen, welches unter Beibehaltung der Horizontalablenkung eine Dehnung des Fernsehbildes in horizontaler Richtung ermöglicht.

Diese Aufgabe wird bei einem Verfahren nach dem Oberbegriff des Anspruchs 1 durch die im kennzeichnenden Teil angegebenen Merkmale gelöst. Bei der Erfindung wird die Dehnung des Bildes in horizontaler Richtung durch zeitliche statt durch geometrische Dehnung erreicht. Dies geschieht, indem nur der darzustellende Ausschnitt einer Bildzeile wiedergegeben und der andere unterdrückt wird. Der Bildinhalt kann so auf eine gesamte Zeilenbreite verteilt und die Horizontalablenkung beibehalten werden. Ein Vorteil dieser Maßnahme besteht auch darin, daß durch die zeitliche Dehnung kein Helligkeitsverlust auftritt und auch keine Bildgeometrieprobleme entstehen, die besondere Abhilfemaßnahmen erfordern. Ferner ist es möglich, beliebige Ausschnitte des Fernsehbildes für die Vergrößerung auszuwählen.

Die Erfindung betrifft ferner eine Schaltungsanordnung zur Ausschnittsvergrößerung eines Fernsehbildes nach dem Oberbegriff des Anspruch 5.

Diesbezüglich liegt ihr die Aufgabe zugrunde, eine Schaltungsanordnung zu schaffen, welche unter Beibehaltung der Horizontalablenkung eine Dehnung des Bildes in horizontaler Richtung ermöglicht.

Diese Aufgabe wird bei einer Schaltungsanordnung nach dem Oberbegriff des Anspruchs 5 durch die im kennzeichnenden Teil angegebenen Merkmale gelöst.

Durch das Speichern der Bildinformationen einer Bildzeile oder wenigstens des darzustellenden Ausschnittes der Bildzeile besteht ein zeitlich beliebiger Zugriff auf diese Bildinformationen. Dementsprechend kann eine zeitliche Dehnung in horizontaler Richtung erreicht werden, wenn die Bildinformationen des Ausschnittes der Bildzeile gerade so ausgelesen werden, daß sie über eine das volle Bildschirmformat ausfüllende Zeile gleichmäßig verteilt sind.

Besonders zweckmäßig ist es, zwei Schreiblesespeicher vorzusehen, deren Dateneingänge mit einer ankommenden Bildsignalleitung und deren Datenausgänge über einen Umschalter mit einer abgehenden Bildsignalleitung verbunden sind. Diese Schreiblesespeicher werden abwechselnd in die Betriebsart "Schreiben" und "Lesen" gesteuert, und zwar so, daß abwech selnd der eine Schreiblesespeicher in der Betriebsart "Lesen" und der andere in der Betriebsart "Schreiben" ist und anschließend der eine in der Betriebsart "Schreiben" und der andere in der Betriebsart "Lesen" ist.

Weiterbildungen und vorteilhafte Ausführungsformen der Erfindung ergeben sich aus den Ansprüchen, der Beschreibung und der Zeichnung, die ein Ausführungsbeispiel des Gegenstandes der Erfindung veranschaulicht.

In der Zeichnung zeigen:

Fig.1 ein Diagramm zur Verdeutlichung der Übertragungs-, Speicher- und Lesevorgänge bei der Dehnung des Fernsehbildes in horizontaler Richtung entsprechend einer Ausgestaltung des Verfahrens nach der Erfindung,

Fig. 2 ein Blockschaltbild der Schaltungsanordnung für eine Dehnung des Fernsehbildes in horizontaler Richtung nach einer Ausführungsform der Erfindung,

Fig. 3 ein Diagramm zu Verdeutlichung der Darstellungsvorgänge bei Dehnung des Fernsehbildes in vertikaler Richtung gemäß einer Weiterbildung des erfindungsgemäßen Verfahrens und

Fig. 4 ein Blockschaltbild der Schaltungsanordnung für eine Dehnung des Fernsehbildes in vertikaler Richtung nach einer Weiterbildung der Erfindung.

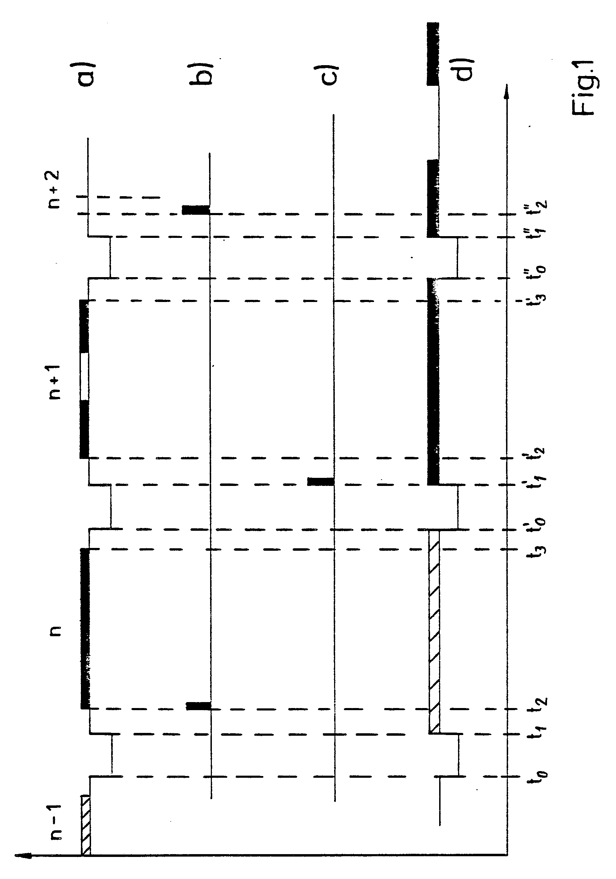

Fig. 1 veranschaulicht die zeitliche Aufteilung der übertragenen oder wiedergegebenen Signale für aufeinanderfolgende Zeilen eines Fernsehbildes. Im Zeitpunkt $t_0$ der Betrachtung beginnt ein Zeilenrücklaufimpuls, der im Zeitpunkt $t_1$ endet. Vom Zeitpunkt $t_1$ bis zum Zeitpunkt $t_0'$ werden die Bildinformationen übertragen oder wiedergegeben und würden bei unveränderter Darstellung auf dem Bildschirm sichtbar. Für die Ausschnittsvergrößerung wird nun zwischen den Zeitpunkten $t_1$ und $t_0'$ ein Bereich zwischen Zeitpunkten $t_2$ und $t_3$ herausgegriffen und für eine gedehnte Darstellung aufbereitet.

Dazu wird gemäß Fig. 1b im Zeitpunkt $t_2$ ein erster Speicher mit den zwischen den Zeitpunkten $t_2$ und $t_3$ aufeinanderfolgenden Bildinformationen geladen und der Speicherinhalt, wie Fig. 1d zeigt, im Zeitpunkt $t_1{}'$ beginnend ausgelesen. Das Auslesen erfolgt zeitlich gedehnt über die Länge einer Zeile und endet somit im Zeitpunkt $t_0{}''$.

Die in der Zeile mit der Ordnungszahl n übertragenen oder wiedergegebenen Signale werden also um eine Zeile zeitverzögert während der Übertragung oder Wiedergabe von Bildinformationen in der Zeile n + 1 dargestellt. Die während der Zeile mit der Ordnungszahl n + 1 übertragenen und wiedergegebenen Signale werden in einem zweiten Speicher zwischen Zeitpunkten $t_2{}'$ und $t_3{}'$ eingeschrieben und in einen Zeitabschnitt, in dem die Zeile mit der Ordnungszahl n + 2 fällt, auf dem Bildschirm dargestellt.

Das Einschreiben und Auslesen erfolgt immer wechselseitig zwischen zwei Speichern, wovon die Darstellung in Fig. 1 nur den einen dieser beiden Speicher betrifft. Der andere Speicher enthält die entsprechenden, in Fig. 1b und c dargestellten Signale um jeweils eine Zeilenlänge n versetzt.

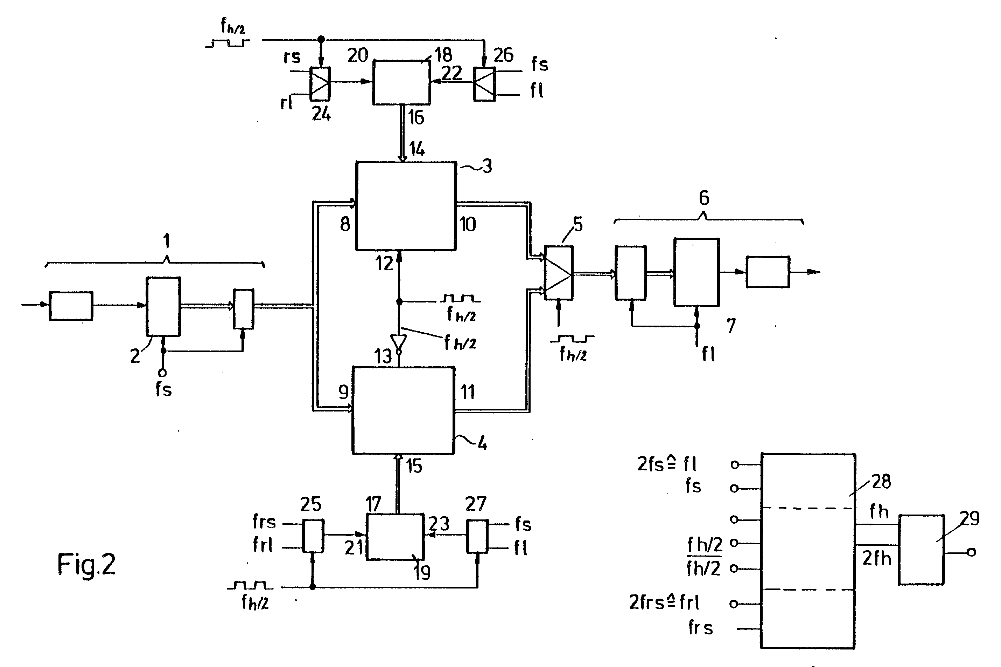

Fig. 2 zeigt ein Blockschaltbild einer erfindungsgemäßen Ausführungsform. Ein ankommender Signalweg 1 mit einem Analog/Digital-Wandler 2 wird auf einen ersten Schreiblesespeicher 3 und einen zweiten Schreiblesespeicher 4 verzweigt und anschließend über einen Multiplexer 5 wieder zu einem abgehenden Signalweg 6 mit einem Digital/Analog-Wandler 7 zusammengeführt. Die Schreiblesespeicher 3 und 4 verfügen über Dateneingänge 8 und 9, Datenausgänge 10 und 11, Schreiblesesteuereingänge 12 und 13 sowie Adresseneingänge 14 und 15. Die Adresseneingänge 14 und 15 der Schreiblesespeicher 3 und 4 sind mit Zählausgängen 16 und 17 von Adressenzählern 18 und 19 verbunden, die ihrerseits Rücksetzeingänge 20 und 21 sowie Takteingänge 22 und 23 aufweisen. Die Rücksetzeingänge 20 und 21 werden über Multiplexer 24 und 25 und die Takteingänge 22 und 23 über Multiplexer 26 und 27 von einer Steuerschaltung 28 angesteuert. Mit dieser Steuerschaltung 28 ist noch eine Zeilenablenkschaltung 29 verbunden.

Der Übersichtlichkeit wegen sind die einzelnen Steuerleitungen nicht eingezeichnet, sondern nur die Signale an den entsprechenden Steuereingangs- bzw. ausgangsklemmen angegeben. Bei den Steuersignalen handelt es sich um Schaltsignale $f_{h/2}$ und $\overline{f_{h/2}}$, also das inverse Signal zu $f_{h/2}$. Diese Signale sind symmetrische Schaltsignale und ändern ihre Zustände nach jeder Zeilenperiode des übertragenen oder wiedergegebenen Bildsignals. Die Steuersignale dienen zur wechselseitigen Umschaltung der Schreiblesespeicher 3 und 4 über die Steuereingänge 12 und 13 von der Betriebsart "Schreiben" auf die Betriebsart "Lesen" und umgekehrt. Außerdem wird der Demultiplexer 5 angesteuert, so daß während jeder Zeilenperiode einmal der Datenausgang 10 und ein anderes Mal der Datenausgang 11 auf den abgehenden Signalweg 6 geschaltet wird. Schließlich werden noch die Multiplexer 24, 25, 26 und 27 mit diesen Schaltsignalen geschaltet.

Die Steuersignale $f_{rl}$ und $f_{rs}$ sind Rücksetzsignale für die Zähler 18 und 19 und entsprechend den in Fig. 1b und d im Zeitpunkt $t_2$ bzw. $t_1$ sowie in den entsprechend nachfolgenden Zeitpunkten dargestellten Rücksetzsignalen. Die Frequenzen der Rücksetzsignale $f_{rs}$ und $f_{rl}$ entsprechen betragsmäßig der Zeilenfrequenz des übertragenen oder wiedergegebenen Bildes, sind jedoch phasenverschoben. Schießlich werden noch Taktsignale erzeugt, die den Zählern 18 und 19 über die Multiplexer 26 und 27 den Takteingängen 22 und 23 zugeführt werden. Es handelt sich um Taktsignale $f_s$ für die Betriebsart "Schreiben" und Taktsignale $f_l$ für die Betriebsart "Lesen". Die Frequenz der Taktsignale entspricht der Anzahl der Bildinformationen oder Bildpunkte dividiert durch die Zeitspanne, in der diese Bildpunkte übertragen und wiedergegeben oder dargestellt werden. Die Taktfrequenz des Taktsignals $f_s$ entspricht dem durch die maximal Auflösung vorgegebene Bildinformationsstrom, die Taktfrequenz $f_l$ ist um denjenigen Faktor kleiner, um den das Bild gedehnt wird.

Die Bildsignale erreichen über den ankommenden Signalweg 1 in digitaler Form die Dateneingänge 8 und 9 der Schreiblesespeicher 3 und 4. Es wird angenommen, daß im Zeitpunkt $t_0$ der Schreiblesespeicher 3 in der Betriebsart "Schreiben" und der Speicher 4 in der Betriebsart "Lesen" ist. Dann ist der Multiplexer 24 so gesteuert, daß er Rücksetzsignale $f_{rs}$ zum Rücksetzeingang 20 durchschaltet und der Multiplexer 25 so gesteuert, daß er Rücksetzsignale $f_{rl}$ zum Eingang 21 durchschaltet. Der Multiplexer 26 ist ferner so geschaltet, daß er Taktsignale $f_s$ zum Takteingang 22 durchschaltet und der Multiplexer 27 schaltet Taktsignale $f_l$ zum Takteingang 23 durch. Anschließend werden die Bilddaten der Zeile n in den Schreiblesespeicher 3 eingeschrieben, indem alle benötigten Speicherplätze nacheinander adressiert werden. Im Schreiblesespeicher 4 waren bereits die Bilddaten der vorhergehenden Zeile n-1 eingeschrieben worden und diese werden nun im Zeitpunkt $t_1$ ausgelesen und über den Demultiplexer 5 auf den abgehenden Signalweg 6 gegeben. Anschließend werden die Schreiblesespeicher 3 und 4 in die jeweils andere Betriebsart versetzt, also aus dem Schreiblesespeicher 3 werden die zuvor gespeicherten Bildsignale ausgelesen und in den Schreiblesespeicher 4 die Bildda ten der nun über-

tragenen oder wiedergegebenen Zeile einge-schrieben. Die zuvor gespeicherten Bilddaten gehen dabei verloren. Um nunmehr den Ausgang 10 des Schreiblesespeichers 3 auf den abgehenden Signalweg 6 zu schalten, wird der Demultiplexer 5 umgeschaltet. Dieser beschriebene Vorgang wiederholt sich nun nach jeder Zeilenperiode des übertragenen oder wiedergegebenen Bildsignals.

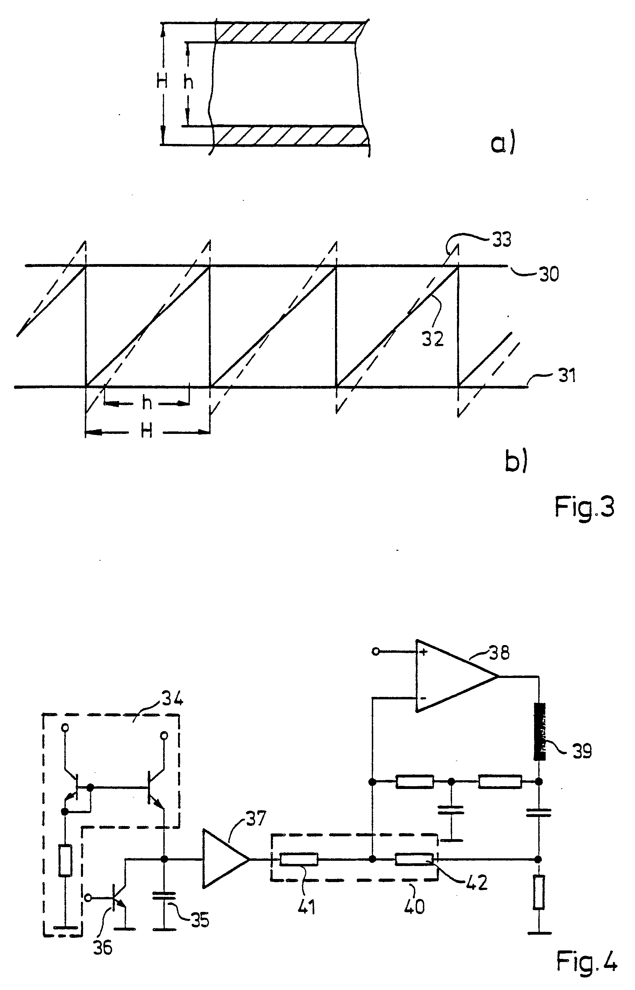

Fig. 3a zeigt einen Bildausschnitt mit der Höhe h, der auf die Höhe H gedehnt werden soll. Fig. 3b zeigt dazu den Verlauf der Vertikalablenkamplitude. Eine das Bildschirmformat ausfüllende Vertikalamplitude liegt gerade zwischen einer oberen Grenze 30 und einer unteren Grenze 31. Ist die Vertikalamplitude, wie beim Kurvenverlauf 32 der Fall, gerade auf diesen Wert eingestellt, so werden alle Bildinformationen enthaltenden Zeilen sichtbar. Wird die Amplitude dagegen erhöht, wie bei 33 dargestellt, so daß der schräge Verlauf die Bereichsgrenzen 30 und 31 schneidet, so werden nur Zeilen eines Ausschnittes h zwischen den beiden Schnittpunkten sichtbar. Dieser Ausschnitt wird allerdings auf die gesamte Höhe des Bildschirmformates gedehnt.

Eine geeignete Schaltungsanordnung ist in Fig. 4 dargestellt. Diese umfaß eine Stromquelle 34, einen davon aufladbaren Ladekondensator 35, der über einen Schalter 36 überbrückbar ist, einen Impedanzwandler 37 sowie einen Vertikalverstärker 38 mit einer Ablenkspule 39 und einem die Verstärkung vorgebenden Netzwerk 40 aus Widerständen 41 und 42.

Der Kondensator 35 wird über die Stromquelle 34 zyklisch aufgeladen und durch den Schalter 36 entladen. Dabei ist die Steigung des schräg verlaufenden Kurventeils durch den Kapazitätswert des Kondensators 35 und den Betrag der Stromstärke der Stromquelle 34 vorgegeben. Der Impedanzwandler 37 dient zur Entkopplung des Kondensators 35 von der Vertikalendstufe 38. Die Verstärkung der Vertikalendstufe 38 ist über das Verhältnis der Widerstände 42 und 41 des Widerstandsnetzwerkes einstellbar. Die am Kondensator 35 anstehende Spannung kann so einen Ablenkstrom in der Ablenkspule 39 bewirken, der die vorgesehene Amplitude besitzt. Im normgemäßen Betrieb sind der Strom der Stromquelle 34, der Wert des Kondensators 35 sowie das Verhältnis der Widerstände 42 und 41 so eingestellt, daß das übertragene oder wiedergegebene Bild gerade formatfüllend auf den Bildschirm dargestellt wird. Durch Erhöhung des Widerstandsverhältnisses 42 zu 41, Verringerung des Kapazitätswertes des Kondensators 35, Erhöhung der Stromstärke der Stromquelle 34 oder eine Kombination aus diesen vorgenannten Maßnahmen kann die Vertikalablenkamplitude erhöht werden, so daß ein Ausschnitt des Fernsehbildes nunmehr formatfüllend dargestellt wird. Die Schaltelemente können mit entsprechenden Umschaltern versehen sein, so daß wahlweise zwischen normgerechter Betriebsart und Ausschnittsvergrößerung umgeschaltet werden kann.

Anstelle der genannten Schaltung ist es auch möglich, eine vertikale Dehnung durch mehrfache Wiedergabe einzelner Zeilen zu bewirken.

## Ansprüche

1. Verfahren zur Ausschnittvergrößerung eines Fernsehbildes durch Dehnung des übertragenen oder gespeicherten und wiedergegebenden Bildes bei der Bildschirmdarstellung in vertikaler und horizontaler Richtung, dadurch gekennzeichnet, daß zur Dehnung des Bildes in horizontaler Richtung aufeinanderfolgende Bildinformationen einer gerade übertragenen oder wiedergegebenen Bildzeile ge-speichert werden und anschließend aufeinanderfol-gende Bildinformationen eines Ausschnitts der Bildzeile über die gesamte Zeilenbreite gedehnt dargestellt werden.

2. Verfahren nach Anspruch 1, dadurch ge-kennzeichnet, daß aufeinanderfolgende Bildinforma-tionen eines Ausschnitts der gerade übertragenen oder wiedergegebenen Bildzeile gespeichert werden und anschließend diese Bildinformationen über die gesamte Zeilenbreite gedehnt dargestellt werden.

3. Verfahren nach Anspruch 1 oder 2, dadurch gekennzeichnet, daß das Verhältnis aus den gesamten Bildinformationen einer Zeile zu den Bil-dinformationen des Ausschnitts dem Vergröße-rungsfaktor entspricht.

4. Verfahren nach einem oder mehreren der Ansprüche 1 bis 3, dadurch gekennzeichnet, daß die Dehnung in vertika ler Richtung durch Erhöhung der Vertikalablenkamplitude erzielt wird.

5. Schaltungsanordnung zur Ausschnittvergrößerung eines Fernsehbildes durch Dehnung des übertragenen oder gespeicherten und wiedergegebenden Bildes bei der Bildschirmdarstellung in vertikaler und horizontaler Richtung, dadurch gekennzeichnet, daß eine Speicherschaltung (3,4,8...27) für Bildinformationen wenigstens des darzustellenden Ausschnittes einer Bildzeile vorgesehen ist und daß die Speicherschaltung (3,4,8...27) mit einer Steuerschaltung (28) verbunden ist, mittels der die Bildinformationen während der Übertragung oder Wiedergabe eingeschrieben und anschließend über eine Zeilenlänge gedehnt ausgelesen werden.

6. Schaltungsanordnung nach Anspruch 5, dadurch gekennzeichnet, daß die Steuerschaltung (28) einen Taktgenerator mit umschaltbaren Taktfrequenzen für das Einschreiben von Bildinformationen in die
Speicherschaltung (3,4,8...27) und für das Auslesen von Bildinformationen aus der Speicherschaltung (3,4,8...27) umfaßt und daß das Verhältnis zwischen den Taktfrequenzen für das Einschreiben und das Auslesen gleich dem Dehnungsfaktor bemessen ist.

7. Schaltungsanordnung nach Anspruch 5 oder 6, dadurch gekennzeichnet, daß die Speicherschaltung zwei Schreib-Lese-Speicher (3,4) umfaßt, deren Dateneingänge (8,9) mit einer ankommenden Bildsignalleitung (1) und deren Datenausgänge (10,11) über einen Umschalter (5) mit einer abgehenden Bildsignalleitung (6) verbunden sind und daß die Schreib-Lese-Speicher (3,4) über ihre Schreib-Lese-Steuereingänge (12,13) wechselweise invers angesteuert sind.

8. Schaltungsanordnung nach einem oder mehreren der Ansprüche 5 bis 7, dadurch gekennzeichnet, daß die Schreib-Lese-Steuereingänge (12,13) mit einem Steuersignal der halben Zeilenfrequenz ($f_{h/2}$) der übertragenen oder gespeicherten Bilder angesteuert sind.

9. Schaltungsanordnung nach einem oder mehreren der Ansprüche 5 bis 8, dadurch gekennzeichnet, daß die Adresseneingänge (14,15) der Schreib-Lese-Speicher (3,4) mit den Ausgängen (16,17) von Zählern (18,19) verbunden sind und die Zähler (18,19) in den Betriebsarten "Schreiben" und "Lesen" der Schreib-Lese-Speicher (3,4) mit einem der Anzahl der Bildinformationen eines Ausschnitts jeder Zeile entsprechenden Anzahl von Takten getaktet sind.

10. Schaltungsanordnung nach einem oder mehreren der Ansprüche 5 bis 9, dadurch gekennzeichnet, daß eine Vertikalablenkschaltung mit einem umschaltbaren Amplitudensteller vorgesehen ist, dessen Stellverhältnis dem Dehnungsfaktor entspricht.

11. Schaltungsanordnung nach Anspruch 10, dadurch gekennzeichnet, daß der Amplitudensteller durch einen oder mehrere veränderbare Widerstände (41,41) im Signal- oder Gegenkopplungsweg einer Vertikalverstärkerstufe (38) gebildet ist.

12. Schaltungsanordnung nach Anspruch 10, dadurch gekennzeichnet, daß der Amplitudensteller durch einen veränderbaren Ladekondensator (35) und/oder eine veränderba re Stromquelle (34) eines Vertikalsägezahngenerators gebildet ist.

Fig.1

a)

b)

c)

d)

n − 1    n    n + 1    n + 2

$t_0$  $t_1$  $t_2$    $t_3$  $t_0'$  $t_1'$  $t_2'$    $t_3'$  $t_0''$  $t_1''$  $t_2''$

EP 0 298 362 A1

H87/018-1

Fig.2

a)

b)

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 029 425 (BELMARES-SARABIA) <br> * Seite 8, Zeilen 9-19; Seite 14, Zeile 10 - Seite 16, Zeile 16; Figur 2 * <br> --- | 1,2,5-7 | H 04 N 5/44 |
| A | US-A-4 282 550 (COVIELLO) <br> * Spalte 2, Zeilen 38-63; Spalte 3, Zeile 12 - Spalte 4, Zeile 41; Figuren 1,4 * <br> --- | 1,2 | |
| A | GB-A-2 073 536 (B.B.C.) <br> * Seite 1, Zeilen 47-58; Figur 2 * <br> --- | 5-9 | |
| A | DE-A-3 421 780 (TV SYSTEM ELECTRONIC GmbH) <br> * Seite 7, Zeilen 11-18 * <br> --- | 4 | |
| A | DE-A-2 839 878 (ROLLEI-WERKE FRANKE & HEIDECKE) <br> * Seite 9, Zeilen 3-12 * <br> --- | 4,10,11 | |
| A | US-A-4 528 585 (BOLGER) <br> ----- | | |

RECHERCHIERTE SACHGEBIETE (Int. Cl.4)

H 04 N

Der vorliegende Recherchenbericht wurde für alle Patentansprüche erstellt

| Recherchenort | Abschlußdatum der Recherche | Prüfer |
|---|---|---|
| DEN HAAG | 04-10-1988 | YVONNET J.W. |

EPO FORM 1503 03.82 (P0403)